# EUROPEAN PATENT APPLICATION

(11) **EP 4 614 653 A1**
(43) Date of publication of application: **10.09.2025**
(21) Application number: 23907832.2
(22) Date of filing: 21.12.2023
(51) Int. Cl.: H01M 10/0567, H01M 10/0587, H01M 10/052, H01M 4/525, H01M 4/36, H01M 4/587, H01M 4/38, H01M 4/48, H01M 50/538, H01M 50/107

(54) **CYLINDRICAL LITHIUM SECONDARY BATTERY**

(30) Priority: 22.12.2022 KR 20220182368; 20.12.2023 KR 20230187677
(71) Applicant: LG Energy Solution, Ltd., Seoul 07335 (KR)
(72) Inventor: SHIN, Won Kyung, Daejeon 34122 (KR); AHN, Kyoung Ho, Daejeon 34122 (KR); LEE, Jung Hoon, Daejeon 34122 (KR); LEE, Kwan Hee, Daejeon 34122 (KR); HAN, Jun Hyeok, Daejeon 34122 (KR); TAKEUCHI, Takashi, Daejeon 34122 (KR); CHOI, Jin Yi, Daejeon 34122 (KR); KO, Hyeon Min, Daejeon 34122 (KR)
(74) Representative: Goddar, Heinz J.
(86) International application number: PCT/KR2023/021332
(87) International publication number: WO 2024/136549

(57) **Abstract**

The present disclosure relates to a cylindrical type lithium secondary battery including an electrode assembly in which a positive electrode plate, a negative electrode plate, and a separator disposed between the positive electrode plate and the negative electrode plate are wound in one direction; a battery can in which the electrode assembly is accommodated; an electrolyte injected into the battery can; and a sealing body sealing an open end of the battery can, wherein the positive electrode plate and the negative electrode plate each include a non-coating portion on which an active material layer is not formed, and each have a structure in which at least a portion of the non-coating portion of the positive electrode plate or the negative electrode plate defines an electrode tab, the cylindrical type lithium secondary battery has a form factor ratio of 0.4 or more, a core portion of the electrode assembly has a diameter of 5 mm to 8 mm, and the electrolyte includes a lithium salt, an organic solvent, and an additive, wherein the additive includes a compound represented by Formula 1, a cyclic carbonate compound, and 1,3-propane sultone, the compound represented by Formula 1 is included in an amount of 0.5 wt% to 5.0 wt% based on a total amount of the electrolyte, and the compound represented by Formula 1, the cyclic carbonate compound, and the 1,3-propanesultone are included in a weight ratio of 1:0.5:0.2 to 1:20:10.

## Description

### TECHNICAL FIELD

### Cross-reference to Related Applications

This application claims priority from Korean Patent Application Nos. 10-2022-0182368, filed on December 22, 2022, and 10-2023-0187677, filed on December 20, 2023, the disclosures of which are incorporated by reference herein.

### Technical Field

The present disclosure relates to a cylindrical type lithium secondary battery.

### BACKGROUND ART

Demand for lithium secondary batteries as an energy source has been significantly increased with technological advances in electric vehicles and portable electronic devices.

The lithium secondary battery may be classified into cylindrical type, prismatic type, and pouch type batteries, wherein, after an electrode assembly, which is prepared by sequentially stacking sheet-shaped positive electrode plate, separator, and negative electrode plate and then winding it in one direction, is accommodated in a cylindrical battery can, the cylindrical type battery among them is formed in a sealed form by covering an upper portion of the battery can with a cap plate. The positive plate and the negative electrode plate are provided with strip-shaped positive electrode tab and negative electrode tab, respectively, and the positive electrode tab and the negative electrode tab are respectively connected to electrode terminals to be electrically connected to an external power source. For reference, the positive electrode terminal is the cap plate, and the negative electrode terminal is the battery can. However, with respect to a conventional cylindrical type battery having such a structure, since a current is concentrated on the strip-shaped electrode tabs, there are problems in that resistance is high, a lot of heat is generated, and current collection efficiency is poor.

As demand for high-capacity batteries has been increased with the recent technological advances in electric vehicles, development of bulky, large-sized cylindrical type batteries has been required. With respect to a small-sized cylindrical type battery commonly used in the past, that is, a cylindrical type battery with a form factor of 1865 or 2170, since capacity was small, resistance or heat generation did not seriously affect battery performance.

However, in a case in which specifications of the conventional small-sized cylindrical type battery are applied as they are to the large-sized cylindrical type battery, serious problems with battery safety may occur. That is, amounts of heat and gas generated in the battery also increase as a size of the battery increases, wherein since temperature and pressure in the battery are increased due to the heat and gas, the battery may ignite or explode. To prevent this, the heat and gas in the battery must be properly discharged to the outside, and, for this purpose, a cross-sectional area of the battery, which becomes a passage for discharging the heat to the outside of the battery, must be increased to match the volume increase. However, since the increase in normal cross-sectional area does not reach the increase in volume, the amount of the heat generated in the battery is increased as the size of the battery is increased, and, as a result, risk of explosion is increased and a problem, such as reduced output, occurs. Also, in a case in which rapid charging is performed at a high voltage, a problem may also occur in which the battery is ignited while a lot of heat is generated around the electrode tab during a short period of time.

Thus, there is a need to develop a cylindrical type battery that may maintain high safety even at high output.

### DISCLOSURE OF THE INVENTION

### TECHNICAL PROBLEM

An aspect of the present disclosure provides a cylindrical type lithium secondary battery which may maintain high safety even at high output through improvement of electrolyte impregnability by controlling an amount of gas generated in the battery using an electrolyte having a specific composition.

### TECHNICAL SOLUTION

According to an embodiment, the present disclosure provides a cylindrical type lithium secondary battery including an electrode assembly in which a positive electrode plate, a negative electrode plate, and a separator disposed between the positive electrode plate and the negative electrode plate are wound in one direction; a battery can in which the electrode assembly is accommodated; an electrolyte injected into the battery can; and a sealing body sealing an open end of the battery can, wherein the positive electrode plate and the negative electrode plate each include a non-coating portion on which an active material layer is not formed, and each have a structure in which at least a portion of the non-coating portion of the positive electrode plate or the negative electrode plate defines an electrode tab, the cylindrical type lithium secondary battery has a form factor ratio of 0.4 or more, a core portion of the electrode assembly has a diameter of 5 mm to 8 mm, and the electrolyte includes a lithium salt, a non-aqueous organic solvent, and an additive, wherein the additive includes a compound represented by Formula 1, a cyclic carbonate compound, and 1,3-propane sultone, the compound represented by Formula 1 is included in an amount of 0.5 wt% to 5.0 wt% based on a total amount of the electrolyte, and the compound represented by Formula 1, the cyclic carbonate compound, and the 1,3-propanesultone are included in a weight ratio of 1:0.5:0.2 to 1:20:10.

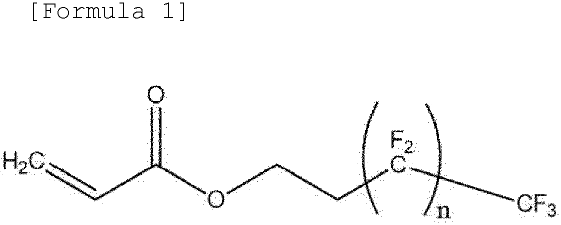

In Formula 1,
n is an integer of 3 to 10.

According to another embodiment, the present disclosure provides a battery pack including the cylindrical type lithium secondary battery according to the present disclosure.

### ADVANTAGEOUS EFFECTS

A cylindrical type lithium secondary battery having a form factor ratio in a specific range according to the present disclosure may adjust internal pressure of a cell by controlling an amount of gas generated in the battery by using an electrolyte containing a specific additive at a specific content ratio, and accordingly, high thermal safety may be secured even at high output by maximizing electrolyte impregnability of an electrode assembly.

### BRIEF DESCRIPTION OF THE DRAWINGS

The following drawings attached to the specification illustrate preferred examples of the present disclosure by example, and serve to enable technical concepts of the present disclosure to be further understood together with detailed description of the invention given below, and therefore the present disclosure should not be interpreted only with matters in such drawings.
FIG. 1 is a view illustrating a stacked state before winding of an electrode assembly according to the present disclosure.
FIG. 2 is a cross-sectional view illustrating a structure of an electrode plate of an electrode assembly according to an embodiment of the present disclosure.
FIG. 3 is a cross-sectional view illustrating a structure of a cylindrical type battery having a tab-less structure according to an embodiment of the present disclosure.
FIG. 4 is a cross-sectional view illustrating a structure of a cylindrical type battery having a tab-less structure according to another embodiment of the present disclosure.
FIG. 5 is a view for explaining a structure of an electrode assembly according to an example of the present disclosure.
FIG. 6 is a view for explaining a battery pack according to the present disclosure.

### MODE FOR CARRYING OUT THE INVENTION

Hereinafter, the present disclosure will be described in more detail.

It will be understood that words or terms used in the specification and claims shall not be interpreted as the meaning defined in commonly used dictionaries, and it will be further understood that the words or terms should be interpreted as having a meaning that is consistent with their meaning in the context of the relevant art and the technical idea of the invention, based on the principle that an inventor may properly define the meaning of the words or terms to best explain the invention.

In the present disclosure, the expression "primary particle" means a particle unit in which a grain boundary does not exist in appearance when observed by using a scanning electron microscope with a field of view of 5,000 times to 20,000 times. The expression "average particle diameter of the primary particle" means an arithmetic average value of particle diameters which is calculated after measuring the particle diameters of the primary particles observed in a scanning electron microscope image.

In the present disclosure, the expression "secondary particle" is a particle formed by aggregation of a plurality of primary particles. In the present disclosure, a secondary particle, in which 10 or less primary particles are aggregated, is referred to as a pseudo-single particle in order to distinguish it from a conventional secondary particle which is formed by aggregation of tens to hundreds of primary particles.

The expression "average particle diameter D₅₀" in the present disclosure means a particle size on the basis of 50% in a volume cumulative particle size distribution of positive electrode active material powder, wherein it may be measured by using a laser diffraction method. For example, after dispersing the positive electrode active material powder in a dispersion medium, the dispersion medium is introduced into a commercial laser diffraction particle size measurement instrument (e.g., Microtrac MT 3000) and then irradiated with ultrasonic waves of about 28 kHz at an output of 60 W to obtain a volume cumulative particle size distribution graph, and the average particle diameter D₅₀ may then be measured by obtaining a particle size corresponding to 50% of cumulative amount of volume.

The expression "consist essentially of A" in the present disclosure indicates that component A is included as a main component, wherein, for example, it means that the component A is included in an amount of 95 wt% to 100 wt%, preferably 98 wt% to 100 wt%, and more preferably 99 wt% to 100 w%.

Conventional large-sized cylindrical type lithium secondary batteries may have different electrolyte impregnabilities depending on a degree of gas generation in a cell and an internal pressure of the cell. Particularly, in a case in which an electrode assembly having a diameter of a core portion of 5 mm to 8 mm is used in the large-sized cylindrical type battery, since it is difficult to control the impregnability of the electrolyte, safety may not be sufficiently ensured. In contrast, since a cylindrical type lithium secondary battery according to the present disclosure may control an internal pressure of a cell by adjusting an amount of gas generated in the cell by using an electrolyte having a specific composition, electrolyte impregnability of an electrode assembly may be improved, and accordingly, an effect of improving thermal stability of the battery may be obtained.

Hereinafter, a configuration of the cylindrical type lithium secondary battery of the present disclosure will be described in detail.

### Electrode Assembly

The electrode assembly is an electrode assembly having a structure in which a positive electrode plate, a negative electrode plate, and a separator disposed between the positive electrode plate and the negative electrode plate are wound in one direction.

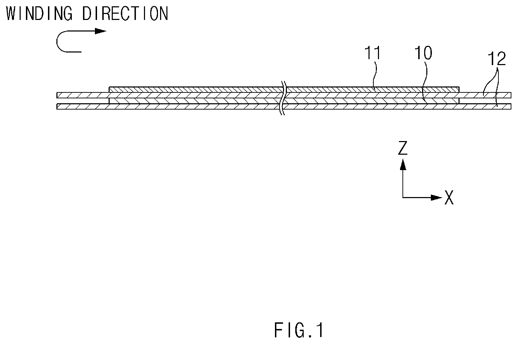

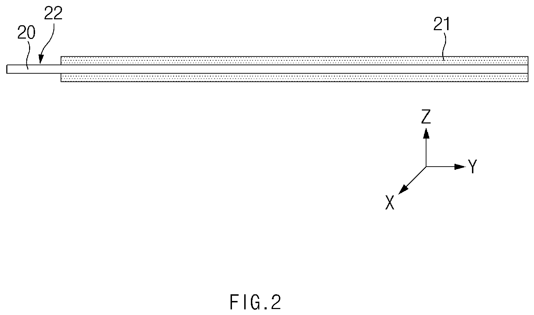

A stacked structure before winding of an electrode assembly according to the present disclosure is illustrated in FIG. 1, and a cross-sectional structure of an electrode plate (positive electrode plate or negative electrode plate) according to the present disclosure is illustrated in FIG. 2.

Referring to FIGS. 1 and 2, an electrode assembly A of the present disclosure may be prepared by winding a stack, which is formed by sequentially stacking a separator 12, a positive electrode plate 10, a separator 12, and a negative electrode plate 11 at least once in one direction X.

In this case, the positive electrode plate 10 and the negative electrode plate 11 each have a structure in which an active material layer 21 is formed on a long sheet-shaped current collector 20, and may include a non-coating portion 22 in which the active material layer 21 is not formed in a partial region of the current collector 20.

If the positive electrode plate 10 and the negative electrode plate 11, which include the non-coating portion 22 as described above, are used, a battery having a tab-less structure, in which a separate electrode tab is not included and at least a portion of the non-coating portions of the positive electrode plate 10 and the negative electrode plate 11 defines an electrode tab, may be achieved.

Specifically, the non-coating portion 22 may be formed long along the winding direction X on one side end of the current collector 20, and the battery having a tab-less structure may be achieved by bonding a current collecting plate to each of the non-coating portion of the positive electrode plate and the non-coating portion of the negative electrode plate and connecting the current collecting plate to an electrode terminal.

For example, a battery having a tab-less structure may be prepared through the following method. First, the separator, the positive electrode plate, the separator, and the negative electrode plate are sequentially stacked such that the non-coating portions 22 of the positive electrode plate 10 and the negative electrode plate 11 are disposed in opposite directions to each other and then wound in one direction to prepare an electrode assembly. Then, after bending the non-coating portions 22 of the positive electrode plate and the negative electrode plate toward a winding center C, current collecting plates are welded and bonded to the non-coating portion of the positive electrode plate and the non-coating portion of the negative electrode plate, respectively, and the battery having a tab-less structure may be prepared by connecting the current collecting plates to the electrode terminals. Since the current collecting plate has a larger cross-sectional area than a strip-type electrode tab and resistance is inversely proportional to a cross-sectional area of a passage through which current flows, cell resistance may be significantly reduced when a secondary battery is formed in the above-described structure.

The positive electrode plate and negative electrode plate non-coating portions may be processed in a form of a plurality of independently bendable segments, and at least a portion of the plurality of segments may be bent toward the winding center C of the electrode assembly.

The segments may be formed by processing the current collectors of the positive electrode plate and the negative electrode plate through a metal foil cutting process such as laser notching, ultrasonic cutting, and punching.

In a case in which the non-coating portions of the positive electrode plate and the negative electrode plate are processed in the form of the plurality of segments, deformation or damage of the non-coating portions may be prevented by reducing stress that is applied to the non-coating portions during bending, and welding characteristics with the current collecting plate may be improved.

The current collecting plate and the non-coating portion are generally bonded by welding, wherein, in order to improve the welding characteristics, a strong pressure must be applied to a welding region of the non-coating portion to bend the non-coating portion as flat as possible. However, a shape of the non-coating portion may be irregularly distorted and deformed during this bending process, and the deformed portion may contact the electrode of opposite polarity to cause an internal short circuit or cause micro-cracks in the non-coating portion. However, if the non-coating portions of the positive electrode plate and the negative electrode plate are processed in the form of the plurality of independently bendable segments, the stress applied to the non-coating portions during bending is mitigated so that the deformation and damage of the non-coating portions may be minimized.

Also, in a case in which the non-coating portion is processed in the form of segments as described above, an overlap occurs between the plurality of segments during bending, and, as a result, welding strength with respect to the current collecting plate is increased and a problem, in which, when the latest technique, such as laser welding, is used, a laser beam penetrates into the electrode assembly to ablate the separator or the active material, may be prevented. Preferably, at least a portion of the plurality of bent segments may be overlapped on an upper end and a lower end of the electrode assembly, and the current collecting plate may be bonded to the overlapped plurality of segments.

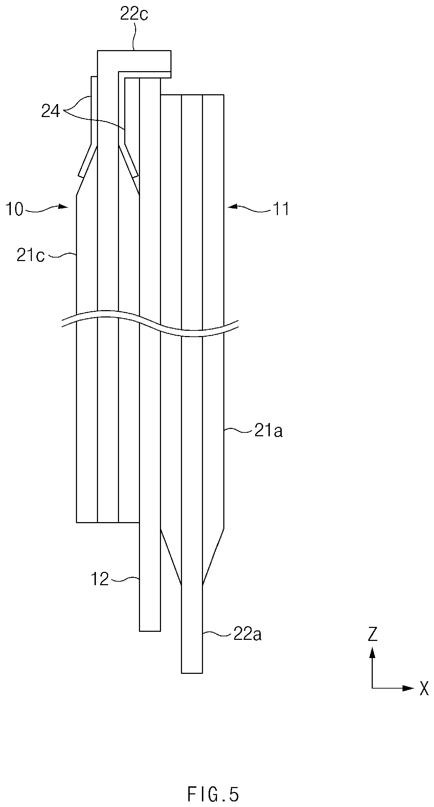

As illustrated in FIG. 5, the electrode assembly according to the present disclosure may be formed in a structure in which an insulation layer 24 is additionally formed on the positive electrode plate 10. Specifically, the insulation layer 24 may be formed to cover a portion of a positive electrode active material layer and a portion of the non-coating portion along a direction parallel to the winding direction of the electrode assembly.

With respect to a battery having a tab-less structure in which a non-coating portion 22c of the positive electrode plate 10 and a non-coating portion 22a of the negative electrode plate 11 are used as electrode tabs, an electrode assembly is formed such that the positive electrode plate 10 protrudes above the separator 12 and the negative electrode plate 11 protrudes below the separator 12, and the protruding positive electrode plate 10 and/or negative electrode plate 11 are bent and then bonded to the current collecting plate. In a case in which the positive electrode plate 10 or the negative electrode plate 11 is bent as described above, the current collector of the positive electrode plate 10 or the negative electrode plate 11 crosses the separator and is disposed close to the electrode having an opposite polarity, and, as a result, there is a possibility that the positive electrode plate and the negative electrode plate are electrically contacted to cause an internal short circuit. However, as illustrated in FIG. 5, in a case in which the insulation layer 24 covering the portions of the positive electrode active material layer and the non-coating portion is formed, since the electrical contact between the positive electrode plate 10 and the negative electrode plate 11 may be prevented by the insulation layer 24, occurrence of a short circuit in the battery may be prevented.

Preferably, the insulation layer 24 may be provided on at least one side of the current collector of the positive electrode plate 10, and preferably, may be provided on both sides of the positive electrode plate 10.

Also, the insulation layer 24 may be formed in a region of the positive electrode plate 10 which may face an active material layer 21a of the negative electrode plate 11. For example, on a surface of the non-coating portion 22c of the positive electrode plate 10 which faces the negative electrode plate 11 after being bent, the insulation layer 24 may be formed by extending to an end of the non-coating portion 22c. However, with respect to a surface opposite to the surface facing the negative electrode plate 11 after being bent, it is desirable that the insulation layer 24 is formed only on a portion of the non-coating portion 22c, for example, before a bending point of the non-coating portion 22c. The reason for this is that, in a case in which the insulation layer 24 is formed on an entire region of the non-coating portion of the surface opposite to the surface facing the negative electrode plate 11, since an electrical contact with the current collecting plate is not possible, it may not function as the electrode tab.

The insulation layer 24 may be used as long as it may be attached to the positive electrode plate while ensuring insulation performance, and a material or component thereof is not particularly limited. For example, the insulation layer may be an insulation coating layer or an insulation tape, and the insulation coating layer may include an organic binder and inorganic particles. In this case, the organic binder, for example, may be a styrene-butadiene rubber (SBR), and the inorganic particles may be alumina oxide, but are not limited thereto.

A diameter of a core portion of the electrode assembly of the present disclosure may be 5 mm or more, specifically, 5 mm to 8 mm. In a case in which the diameter of the core portion of the electrode assembly satisfies the above range, a defect rate may be suppressed in a winding process for preparing the electrode assembly, and a sufficient space for electrolyte injection may be secured in the cylindrical type secondary battery. In a case in which the diameter of the core portion of the electrode assembly is less than 5 mm, since an internal pressure of the cell is increased by gas that is generated by the electrolyte during charge and discharge, an issue, such as venting, may occur. In contrast, in a case in which the diameter of the core portion of the electrode assembly is greater than 8 mm, since energy density per cell volume is decreased and wettability to the electrolyte is reduced, cell performance degradation may occur. Particularly, with respect to a large-sized cylindrical type battery having a form factor of 0.4 or more, maintaining of an appropriate level of internal pressure may maximize cell performance by improving electrolyte wettability to the electrode assembly. Thus, in the present disclosure, since the electrolyte having a specific additive composition was used in combination with the electrode assembly having a core diameter of 5 mm or more, specifically, 5 mm to 8 mm, the amount of the gas generated in the cell was adjusted and the internal pressure of the cell was accordingly maintained at an appropriate level, and thus, the electrolyte impregnability of the electrode assembly may be improved.

An overall diameter of the electrode assembly may be a normal diameter corresponding to the large-sized cylindrical type battery having a form factor of 0.4 or more.

Next, each component of the electrode assembly of the present disclosure will be described in more detail.

### (1) Positive Electrode Plate

The positive electrode plate may be formed in a structure in which a positive electrode active material layer is formed on one side or both sides of a long sheet-shaped positive electrode collector, and the positive electrode active material layer may include a positive electrode active material, a conductive agent, and a binder.

Specifically, the positive electrode plate may be prepared by a method in which a positive electrode slurry, which is prepared by dispersing the positive electrode active material, the conductive agent, and the binder in a solvent such as dimethyl sulfoxide (DMSO), isopropyl alcohol, N-methylpyrrolidone (NMP), acetone, and water, is applied to one side or both sides of the long sheet-shaped positive electrode collector, the solvent of the positive electrode slurry is removed through a drying process, and rolling is performed. A positive electrode plate including a non-coating portion may be prepared by a method in which the positive electrode slurry is not applied to a partial region of the positive electrode collector, for example, one end of the positive electrode collector when the positive electrode slurry is applied.

As the positive electrode collector, various positive electrode collectors used in the art may be used. For example, as the positive electrode collector, stainless steel, aluminum, nickel, titanium, fired carbon, or aluminum or stainless steel that is surface-treated with one of carbon, nickel, titanium, silver, or the like may be used. The positive electrode collector may typically have a thickness of 3 µm to 500 µm, and microscopic irregularities may be formed on a surface of the collector to improve the adhesion of the positive electrode active material. The positive electrode collector, for example, may be used in various shapes such as that of a film, a sheet, a foil, a net, a porous body, a foam body, a non-woven fabric body, and the like.

Also, the positive electrode plate of the present disclosure may use a positive electrode active material having an amount of nickel (Ni) among transition metals excluding lithium of 80 mol% or more to be able to achieve high capacity. Specifically, a positive electrode active material having an amount of Ni among transition metals excluding lithium of 80 mol% or more to less than 100 mol%, 82 mol% or more to less than 100 mol%, or 83 mol% or more to less than 100 mol% may be used as the positive electrode active material, and, preferably, the positive electrode active material may include a lithium nickel-based oxide represented by [Formula 2] below.

[Formula 2] LiₐNi_{b}Co_{c}M¹_{d}M²ₑO₂

In Formula 2, M¹ may be manganese (Mn), aluminum (Al), or a combination thereof, and may preferably be Mn or Mn and Al.

M² may be at least one selected from the group consisting of zirconium (Zr), tungsten (W), yttrium (Y), barium (Ba), calcium (Ca), titanium (Ti), magnesium (Mg), tantalum (Ta), and niobium (Nb), may preferably be at least one selected from the group consisting of Zr, Y, Mg, and Ti, and may more preferably be Zr, Y, or a combination thereof. The element M² is not necessarily included, but, in a case in which it is included in an appropriate amount, it may play a role in promoting grain growth during sintering or improving crystal structure stability.
a represents a molar ratio of lithium in the lithium nickel-based oxide, wherein a may satisfy 0.8≤a≤1.2, or may satisfy 0.85≤a≤1.15, and may specifically satisfy 0.9≤a≤1.2. When the molar ratio of the lithium satisfies the above range, a crystal structure of the lithium nickel-based oxide may be stably formed.
b represents a molar ratio of nickel among total metals excluding lithium in the lithium nickel-based oxide, wherein b may satisfy 0.85≤b<1, or may satisfy 0.86≤b<1, and may specifically satisfy 0.88≤b<1. When the molar ratio of the nickel satisfies the above range, high energy density may be exhibited to achieve high capacity.
c represents a molar ratio of cobalt among the total metals excluding lithium in the lithium nickel-based oxide, wherein c may satisfy 0<c<0.15, or may satisfy 0<c<0.14, and may specifically satisfy 0.01≤c≤0.12. When the molar ratio of the cobalt satisfies the above range, good resistance characteristics and output characteristics may be achieved.
d represents a molar ratio of element M¹ among the total metals excluding lithium in the lithium nickel-based oxide, wherein d may satisfy 0<d<0.15, or may satisfy 0<d<0.14, and may specifically satisfy 0.01≤d≤0.12. When the molar ratio of the element M¹ satisfies the above range, structural stability of the positive electrode active material is excellent.
e represents a molar ratio of element M² among the total metals excluding lithium in the lithium nickel-based oxide, wherein e may satisfy 0≤e≤0.1 or may satisfy 0≤e≤0.05.

The positive electrode active material according to the present disclosure may further include a coating layer including at least one coating element selected from the group consisting of Al, Ti, W, boron (B), fluorine (F), phosphorus (P), Mg, Ni, cobalt (Co), iron (Fe), chromium (Cr), vanadium (V), copper (Cu), Ca, zinc (Zn), Zr, Nb, molybdenum (Mo), strontium (Sr), antimony (Sb), bismuth (Bi), silicon (Si), and sulfur (S) on surfaces of particles of the lithium nickel-based oxide, if necessary. Preferably, the coating element may be Al, B, Co, or a combination thereof, and most preferably, the coating element may be B.

In a case in which the coating layer is present on the surfaces of the lithium nickel-based oxide particles, a contact between the electrolyte and the lithium complex transition metal oxide is suppressed by the coating layer, and, as a result, an effect of reducing transition metal dissolution or gas generation due to a side reaction with the electrolyte may be obtained.

The positive electrode active material may be included in an amount of 80 wt% to 99 wt%, preferably 85 wt% to 99 wt%, and more preferably 90 wt% to 99 wt% based on a total weight of the positive electrode active material layer.

A form of the positive electrode active material is not particularly limited, and the positive electrode active material may be in a form of a secondary particle in which a plurality of primary particles are aggregated, in a form of a single particle composed of one primary particle, or a combination thereof.

With respect to the secondary particle, since formation of voids in the electrode is advantageous, an electrolyte wetting effect may be improved. In a case in which a mixture of the secondary particles and the single particles is used, the secondary particles and the single particles may be mixed at 80:20, specifically, 50:50 and used.

Preferably, the positive electrode active material may include a positive electrode active material which is composed of a single particle composed of one primary particle and/or a pseudo-single particle as an aggregate of 10 or less primary particles, or a combination thereof. A large-sized cylindrical type battery having high capacity and excellent safety may be obtained by using the positive electrode active material which is composed of the single particle composed of one primary particle and/or the pseudo-single particle as an aggregate of 10 or less primary particles.

Conventionally, it was common to use a spherical secondary particle, in which tens to hundreds of primary particles are aggregated, as a positive electrode active material of a lithium secondary battery. However, with respect to the positive electrode active material in a form of a secondary particle in which many primary particles are aggregated as described above, there is a problem in that particle breakage, in which the primary particles fall off in a rolling process during preparation of a positive electrode, is likely to occur and cracks occur in the particles during charge and discharge. In a case in which the particle breakage or cracking of the positive electrode active material occurs, since a contact area with an electrolyte solution is increased, there is a problem in that gas generation is increased due to a side reaction with the electrolyte solution. If the gas generation in the cylindrical type battery is increased, since a pressure in the battery is increased, there is a risk of battery explosion. Particularly, in a case in which a volume of the cylindrical type battery is increased, since the amount of active material in the battery is increased with the increase in volume and, as a result, the gas generation amount is also significantly increased, a risk of ignition and/or explosion of the battery further increases.

In contrast, since the positive electrode active material in the form of a single particle composed of one primary particle or a pseudo-single particle, in which 10 or less primary particles are aggregated, has higher particle strength than the conventional positive electrode active material in the form of a secondary particle in which tens to hundreds of primary particles are aggregated, the particle breakage during rolling hardly occurs. Also, with respect to the positive electrode active material in the form of a single particle or a pseudo-single particle, since the number of primary particles constituting the particle is small, changes due to volume expansion and contraction of the primary particles during charge and discharge are small, and accordingly, the occurrence of cracks in the particles is significantly reduced.

Accordingly, in a case in which the positive electrode active material composed of the single particle and/or pseudo-single particle is used, the gas generation amount due to the particle breakage and the occurrence of internal cracks may be significantly reduced, and accordingly, excellent safety may be achieved even in the large-sized cylindrical type battery.

It is desirable that the positive electrode active material composed of the single particle and/or pseudo-single particle is included in an amount of 95 wt% to 100 wt%, preferably 98 wt% to 100 wt%, more preferably 99 wt% to 100 wt%, and even more preferably 100 wt% based on a weight of the total positive electrode active material included in the positive electrode active material layer. When the amount of the single particle and/or pseudo-single particle satisfies the above range, sufficient safety may be obtained when the positive electrode active material is used in a large-sized cylindrical type battery.

The positive electrode active material in the form of a single particle and/or a pseudo-single particle according to the present disclosure may have an average particle diameter D₅₀ of 5 µm or less, 4 µm or less, 3 µm or less, or 2 µm or less, for example, 0.5 µm to 5 µm, preferably 1 µm to 5 µm, and more preferably 2 µm to 5 µm. When the average particle diameter D₅₀ of the positive electrode active material satisfies the above range, an increase in resistance may be minimized.

Since the positive electrode active material in the form of a single particle and/or a pseudo-single particle has less interface, as a diffusion path for lithium ions in the particle, between the primary particles, lithium mobility is lower than that of the positive electrode active material in the form of a secondary particle, and, as a result, resistance may be increased. This increase in resistance intensifies as a size of the particle is increased, and capacity and output characteristics are adversely affected when the resistance is increased. Thus, in the present disclosure, since the positive electrode active material in the form of a single particle and/or a pseudo-single particle having an average particle diameter D₅₀ of 5 µm or less is used to minimize a diffusion distance of lithium ions in the particle, the increase in resistance may be suppressed.

The positive electrode active material in the form of a single particle and/or a pseudo-single particle may have an average particle diameter D₅₀ of the primary particles of 5 µm or less, 4 µm or less, 3 µm or less, or 2 µm or less, for example, 0.5 µm to 5 µm, preferably 1 µm to 5 µm, and more preferably 2 µm to 5 µm. When the average particle diameter of the primary particles satisfies the above range, the positive electrode active material in the form of a single particle and/or a pseudo-single particle having excellent electrochemical properties may be formed. If the average particle diameter of the primary particles is excessively small, the number of aggregations of the primary particles constituting the positive electrode active material is increased to reduce an effect of suppressing the particle breakage during rolling, and, if the average particle diameter of the primary particles is excessively large, the lithium diffusion path in the primary particle may be increased to increase the resistance and degrade the output characteristics.

In the present disclosure, it is desirable that the positive electrode active material in the form of a single particle and/or a pseudo-single particle has a unimodal particle size distribution. Conventionally, in order to improve electrode density of the positive electrode active material layer, a bimodal positive electrode active material, in which a large-particle-diameter positive electrode active material having a large average particle diameter and a small-particle-diameter positive electrode active material having a small average particle diameter are mixed, has been widely used. However, with respect to the positive electrode active material in the form of a single particle and/or a pseudo-single particle, if the particle diameter is increased, since a lithium movement path is increased to significantly increase the resistance, a problem, in which the capacity and output characteristics are degraded, may occur when the large-diameter particles are mixed and used. Thus, in the present disclosure, the increase in resistance may be minimized by using the positive electrode active material having a unimodal distribution.

Next, the conductive agent is used to provide conductivity to the electrode, wherein any conductive agent may be used without particular limitation as long as it has electron conductivity without causing chemical changes in the battery. Specific examples of the conductive agent may be graphite powder such as natural graphite or artificial graphite; carbon black such as carbon black, acetylene black, Ketjen black, channel black, furnace black, lamp black, thermal black, carbon fibers, and carbon nanotubes; powder or fibers of metal such as copper, nickel, aluminum, and silver; conductive whiskers such as zinc oxide whiskers and potassium titanate whiskers; conductive metal oxides such as titanium oxide; or conductive polymers such as polyphenylene derivatives, and any one thereof or a mixture of two or more thereof may be used. The conductive agent may be typically included in an amount of 1 wt% to 30 wt%, preferably 1 wt% to 20 wt%, and more preferably 1 wt% to 10 wt% based on the total weight of the positive electrode active material layer.

The binder improves adhesion between the positive electrode active material particles and adhesion between the positive electrode active material and the positive electrode collector, wherein specific examples of the binder may be a fluorine resin-based binder including polyvinylidene fluoride (PVDF) or polytetrafluoroethylene (PTFE); a rubber-based binder including a styrene butadiene rubber (SBR), an acrylonitrile-butadiene rubber, or a styrene-isoprene rubber; a cellulose-based binder including carboxymethylcellulose (CMC), starch, hydroxypropylcellulose, or regenerated cellulose; a polyalcohol-based binder including polyvinyl alcohol; a polyolefin-based binder including polyethylene or polypropylene; a polyimide-based binder; a polyester-based binder; and a silane-based binder, and any one thereof or a mixture of two or more thereof may be used. The binder may be included in an amount of 1 wt% to 30 wt%, preferably 1 wt% to 20 wt%, and more preferably 1 wt% to 10 wt% based on the total weight of the positive electrode active material layer.

An insulation layer covering a portion of the positive electrode active material layer and a portion of the non-coating portion may be further formed on the positive electrode plate according to the present disclosure, if necessary. The insulation layer may be formed along a direction parallel to the winding direction of the electrode assembly.

### (2) Negative Electrode Plate

The negative electrode plate may be formed in a structure in which a negative electrode active material layer is formed on one side or both sides of a long sheet-shaped negative electrode collector, and the negative electrode active material layer includes a negative electrode active material, a conductive agent, and a binder.

Specifically, the negative electrode plate may be prepared by a method in which a negative electrode slurry, which is prepared by dispersing the negative electrode active material, the conductive agent, and the binder in a solvent such as dimethyl sulfoxide (DMSO), isopropyl alcohol, N-methylpyrrolidone (NMP), acetone, and water, is applied to one side or both sides of the long sheet-shaped negative electrode collector, the solvent of the negative electrode slurry is removed through a drying process, and rolling is performed. A negative electrode plate including a non-coating portion may be prepared by a method in which the negative electrode slurry is not applied to a partial region of the negative electrode collector, for example, one end of the negative electrode collector when the negative electrode slurry is applied.

The negative electrode active material may include a negative electrode active material capable of reversibly intercalating and deintercalating lithium.

Preferably, the negative electrode active material may include a silicon-based negative electrode active material. The silicon-based negative electrode active material may be Si, a Si-Me alloy (where Me is at least one selected from the group consisting of Al, tin (Sn), Mg, Cu, Fe, lead (Pb), Zn, Mn, Cr, Ti, and Ni), SiO_{y} (where 0<y<2), a Si-C composite, or a combination thereof, and may preferably be SiO_{y} (where 0<y<2). Since the silicon-based negative electrode active material has high theoretical capacity, the capacity characteristics may be improved when the silicon-based negative electrode active material is included.

The silicon-based negative electrode active material may be doped with M^{b} metal, and, in this case, the M^{b} metal may be a Group 1 metal element or a Group 2 metal element, and specifically, may be lithium (Li), Mg, or the like. Specifically, the silicon-based negative electrode active material may be Si, SiO_{y} (where 0<y<2), or a Si-C composite which is doped with the M^{b} metal. With respect to the metal-doped silicon-based negative electrode active material, capacity of the active material is somewhat reduced due to the doping element, but, since it has high efficiency, high energy density may be achieved.

Also, the silicon-based negative electrode active material may further include a carbon coating layer on a surface of the particle. In this case, a carbon coating amount may be 20 wt% or less, preferably, 1 wt to 20 wt% based on a total weight of the silicon-based negative electrode active material.

Furthermore, the negative electrode active material, if necessary, may further include a carbon-based negative electrode active material. The carbon-based negative active material, for example, may be artificial graphite, natural graphite, graphitized carbon fibers, amorphous carbon, soft carbon, or hard carbon, but is not limited thereto.

In a case in which a mixture of the silicon-based negative electrode active material and the carbon-based negative electrode active material is used as the negative electrode active material, a mixing ratio of the silicon-based negative electrode active material to the carbon-based negative electrode active material may be in a range of 1:99 to 20:80, preferably 1:99 to 15:85, and more preferably 1:99 to 10:90, as a weight ratio.

The negative electrode active material may be included in an amount of 80 wt% to 99 wt%, preferably 85 wt% to 99 wt%, and more preferably 90 wt% to 99 wt% based on a total weight of the negative electrode active material layer.

As the negative electrode collector, negative electrode collectors commonly used in the art may be used, and, for example, copper, stainless steel, aluminum, nickel, titanium, fired carbon, copper or stainless steel that is surface-treated with one of carbon, nickel, titanium, silver, or the like, and an aluminum-cadmium alloy may be used. The negative electrode collector may typically have a thickness of 3 µm to 500 µm, and, similar to the positive electrode collector, microscopic irregularities may be formed on the surface of the collector to improve the adhesion of a negative electrode active material. The negative electrode collector, for example, may be used in various shapes such as that of a film, a sheet, a foil, a net, a porous body, a foam body, a non-woven fabric body, and the like.

The conductive agent is used to provide conductivity to the negative electrode, wherein any conductive agent may be used without particular limitation as long as it has electron conductivity without causing chemical changes in the battery. Specific examples of the conductive agent may be graphite such as natural graphite or artificial graphite; carbon black such as carbon black, acetylene black, Ketjen black, channel black, furnace black, lamp black, thermal black, carbon fibers, and carbon nanotubes; powder or fibers of metal such as copper, nickel, aluminum, and silver; conductive whiskers such as zinc oxide whiskers and potassium titanate whiskers; conductive metal oxides such as titanium oxide; or conductive polymers such as polyphenylene derivatives, and any one thereof or a mixture of two or more thereof may be used. The conductive agent may be typically included in an amount of 1 wt% to 30 wt%, preferably 1 wt% to 20 wt%, and more preferably 1 wt% to 10 wt% based on the total weight of the negative electrode active material layer.

The binder improves adhesion between the negative electrode active material particles and adhesion between the negative electrode active material and the negative electrode collector, wherein specific examples of the binder may be a fluorine resin-based binder including polyvinylidene fluoride (PVDF) or polytetrafluoroethylene (PTFE); a rubber-based binder including a styrene butadiene rubber (SBR), an acrylonitrile-butadiene rubber, or a styrene-isoprene rubber; a cellulose-based binder including carboxymethylcellulose (CMC), starch, hydroxypropylcellulose, or regenerated cellulose; a polyalcohol-based binder including polyvinyl alcohol; a polyolefin-based binder including polyethylene or polypropylene; a polyimide-based binder; a polyester-based binder; and a silane-based binder, and any one thereof or a mixture of two or more thereof may be used. The binder may be included in an amount of 1 wt% to 30 wt%, preferably 1 wt% to 20 wt%, and more preferably 1 wt% to 10 wt% based on the total weight of the negative electrode active material layer.

### (3) Separator

The separator separates the negative electrode and the positive electrode and provides a movement path of lithium ions, wherein any separator may be used as the separator without particular limitation as long as it is typically used in a lithium secondary battery. Specifically, a porous polymer film, for example, a porous polymer film prepared from a polyolefin-based polymer, such as an ethylene homopolymer, a propylene homopolymer, an ethylene/butene copolymer, an ethylene/hexene copolymer, and an ethylene/methacrylate copolymer, or a laminated structure having two or more layers thereof may be used as the separator. Also, a typical porous nonwoven fabric, for example, a nonwoven fabric formed of high melting point glass fibers or polyethylene terephthalate fibers may be used. Furthermore, a coated separator including a ceramic component or a polymer material may be used to secure heat resistance or mechanical strength.

### Cylindrical Type Lithium Secondary Battery

Next, a cylindrical type lithium secondary battery according to the present disclosure will be described.

The cylindrical type lithium secondary battery according to the present disclosure includes an electrode assembly in which a positive electrode plate, a negative electrode plate, and a separator disposed between the positive electrode plate and the negative electrode plate are wound in one direction; a battery can in which the electrode assembly is accommodated; an electrolyte injected into the battery can; and a sealing body sealing an open end of the battery can.

Preferably, the cylindrical type lithium secondary battery according to the present disclosure may be a large-sized cylindrical type battery having a form factor ratio (defined as a value obtained by dividing a diameter of the cylindrical type battery by a height, that is, a ratio of the diameter (T) to the height (H)) of 0.4 or more. Herein, the form factor means a value representing the diameter and height of the cylindrical type battery.

The cylindrical type battery according to the present disclosure, for example, may be a 46110 cell (diameter 46 mm, height 110 mm, form factor ratio 0.418), a 48110 cell (diameter 48 mm, height 110 mm, form factor ratio 0.44), a 4880 cell (diameter 48 mm, height 80 mm, form factor ratio 0.600), a 4680 cell (diameter 46 mm, height 80 mm, form factor ratio 0.58), or a 4695 cell (diameter 46 mm, height 95 mm, form factor ratio 0.48). In a number representing the form factor, first two numbers represent the diameter of the cell, and next two or three numbers represent the height of the cell.

The cylindrical type lithium secondary battery according to the present disclosure significantly reduces a gas generation amount in comparison to a conventional case, and accordingly, excellent safety may be achieved even in a cylindrical type battery having a form factor ratio of 0.4 to 0.6.

The cylindrical type battery according to the present disclosure may preferably be a battery having a tab-less structure which does not include an electrode tab, but is not limited thereto.

The battery having a tab-less structure, for example, may have a structure in which a positive electrode plate and a negative electrode plate each include a non-coating portion on which an active material layer is not formed, the non-coating portion of the positive electrode plate and the non-coating portion of the negative electrode plate are disposed at an upper end and a lower end of the electrode assembly, respectively, a current collecting plate is bonded to each of the non-coating portion of the positive electrode plate and the non-coating portion of the negative electrode plate, and the current collecting plate is connected to an electrode terminal.

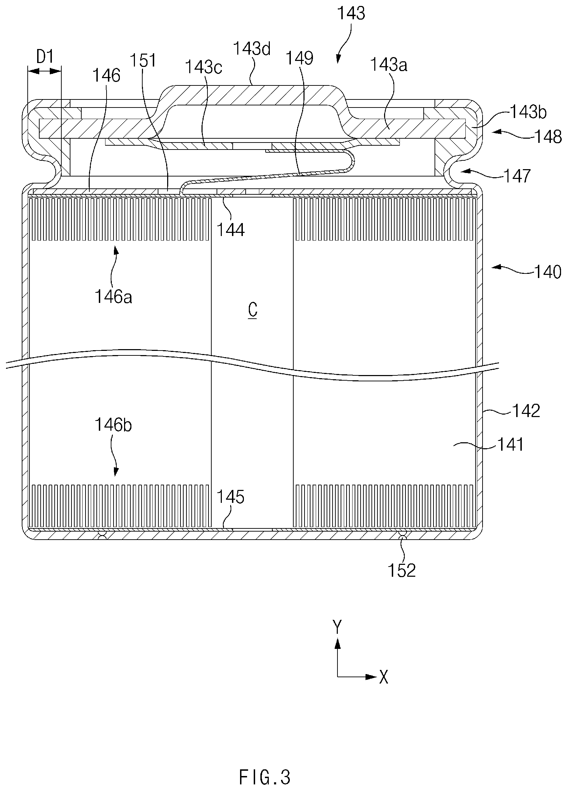

A cross-sectional view of a cylindrical type battery having a tab-less-structure according to an embodiment of the present disclosure is illustrated in FIG. 3. Hereinafter, the cylindrical type battery according to the embodiment of the present disclosure will be described with reference to FIG. 3. However, FIG. 3 only shows one embodiment of the present disclosure, and the structure of the cylindrical type battery of the present disclosure is not limited to the scope disclosed in FIG. 3.

A cylindrical type battery 140 according to an embodiment of the present disclosure includes an electrode assembly 141 as described above, a battery can 142 in which the electrode assembly 141 is accommodated, and a sealing body 143 sealing an open end of the battery can 142.

In this case, a positive electrode plate and a negative electrode plate of the electrode assembly may each include a non-coating portion on which an active material layer is not formed, and may be stacked and wound such that the positive electrode non-coating portion and the negative electrode non-coating portion are disposed at the upper end and the lower end of the electrode assembly, respectively. Since the electrode assembly has been described above, only components other than the electrode assembly will be described below.

The battery can 142 is a cylindrical type container having an upper opening, wherein it is formed of a conductive metallic material such as aluminum or steel. The battery can accommodates the electrode assembly 141 in an inner space through the upper end opening and also accommodates an electrolyte (not shown) together.

It is desirable that the cylindrical type battery 140 of the present disclosure does not include a current interruption device (CID).

### (A) Electrolyte

An electrolyte used in the cylindrical type lithium secondary battery of the present disclosure includes (i) a lithium salt, (ii) a non-aqueous organic solvent, and (iii) an additive, wherein a compound represented by Formula 1 below, a cyclic carbonate compound, and 1,3-propane sultone may be included as the (iii) additive.

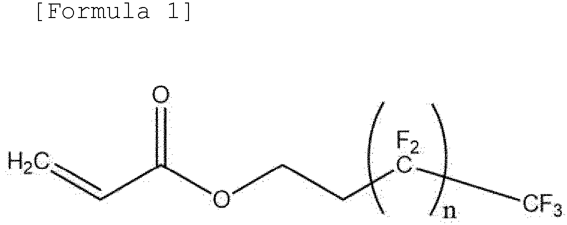

In Formula 1,
n is an integer of 3 to 10.

### (i) Lithium Salt

The lithium salt is used as an electrolyte salt in a lithium secondary battery, wherein it is used as a medium for transferring ions. Typically, the lithium salt, for example, may include Li⁺ as a cation, and may include at least one selected from the group consisting of F⁻, Cl⁻, Br⁻, I⁻, NO₃⁻, N(CN)₂⁻, BF₄⁻, ClO₄⁻, B₁₀Cl₁₀⁻, AlCl₄⁻, AlO₂⁻, PF₆⁻, CF₃SO₃⁻, CH₃CO₂⁻, CF₃CO₂-, AsF₆-, SbF₆-, CH₃SO₃-, (CF₃CF₂SO₂)₂N-, (CF₃SO₂)₂N-, (FSO₂)₂N-, BF₂C₂O₄-, BC₄O₈-, PF₄C₂O₄⁻, PF₂C₄O₈-, (CF₃)₂PF₄-, (CF₃)₃PF₃-, (CF₃)₄PF₂-, (CF₃)₅PF-, (CF₃)₆P-, C₄F₉SO₃-, CF₃CF₂SO₃-, CF₃CF₂(CF₃)₂CO-, (CF₃SO₂)₂CH⁻, CF₃(CF₂)₇SO₃-, and SCN⁻ as an anion.

Specifically, the lithium salt may include a single material selected from the group consisting of LiCl, LiBr, LiI, LiBF₄, LiClO₄, LiB₁₀Cl₁₀, LiAlCl₄, LiAlO₂, LiPF₆, LiCF₃SO₃, LiCH₃CO₂, LiCF₃CO₂, LiAsF₆, LiSbF₆, LiCH₃SO₃, LiN(SO₂F)₂ (lithium bis (fluorosulfonyl) imide; LiFSI), LiN(SO₂CF₂CF₃)₂ (lithium bis(perfluoroethanesulfonyl)imide; LiBETI), and LiN(SO₂CF₃)₂ (lithium bis(trifluoromethanesulfonyl)imide; LiTFSI) or a mixture of two or more thereof. In addition to these materials, a lithium salt typically used in an electrolyte of a lithium secondary battery may be used without limitation.

The lithium salt may be included in a concentration of 1.3 M or less in the electrolyte, and may specifically be included in a concentration of 1.2 M to 1.3 M. In a case in which the concentration of the lithium salt satisfies the above range, electrolyte impregnability for the electrode assembly having a core diameter of 5 mm or more may be improved.

### (ii) Non-aqueous Organic Solvent

The non-aqueous organic solvent may include at least one selected from the group consisting of a cyclic carbonate-based compound, a linear carbonate-based compound, a linear ester-based compound, and a cyclic ester-based compound.

Specifically, the non-aqueous organic solvent may include a cyclic carbonate-based compound, a linear carbonate-based compound, or a mixture thereof.

The cyclic carbonate-based compound is a highly viscous, high-permittivity compound, wherein it may easily dissociate the lithium salt in the electrolyte. Specific examples of the cyclic carbonate-based compound may be at least one selected from the group consisting of ethylene carbonate (EC), propylene carbonate (PC), 1,2-butylene carbonate, 2,3-butylene carbonate, 1,2-pentylene carbonate, 2,3-pentylene carbonate, and vinylene carbonate, and, among them, the cyclic carbonate-based compound may include ethylene carbonate.

The cyclic carbonate-based compound may be included in an amount of 15 vol% to 30 vol%, preferably 15 vol% to 25 vol%, and most preferably 15 vol% to 20 vol% in the organic solvent. In a case in which the cyclic carbonate-based compound is included in the above range, it may improve thermal safety by forming a uniform solid electrolyte interphase (SEI) layer on the negative electrode plate.

Also, the linear carbonate-based compound is a compound having low viscosity and low permittivity, wherein typical examples of the linear carbonate-based compound may be at least one organic solvent selected from the group consisting of dimethyl carbonate (DMC), diethyl carbonate (DEC), dipropyl carbonate, ethyl methyl carbonate (EMC), methylpropyl carbonate, and ethylpropyl carbonate, and the linear carbonate-based compound may specifically include ethyl methyl carbonate (EMC).

Furthermore, the non-aqueous organic solvent may further include at least one ester-based compound selected from the group consisting of a linear ester-based compound and a cyclic ester-based compound to prepare an electrolyte having high ionic conductivity.

Specific examples of the linear ester-based compound may be at least one compound selected from the group consisting of methyl acetate, ethyl acetate, propyl acetate, methyl propionate, ethyl propionate, propyl propionate, and butyl propionate.

Also, the cyclic ester-based compound may include at least one selected from the group consisting of γ-butyrolactone, γ-valerolactone, γ-caprolactone, σ-valerolactone, and ε-caprolactone.

### (iii) Additive

The electrolyte of the present disclosure may include a compound represented by Formula 1 below, a cyclic carbonate compound, and 1,3-propane sultone as an additive.

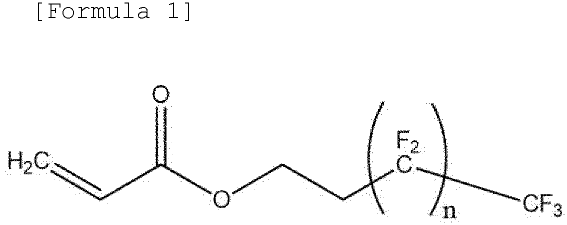

In Formula 1,
n is an integer of 3 to 10.

Specifically, in Formula 1, n may be an integer of 3 to 7.

In a case in which the integer of n satisfies the above range, since thermal properties of the compound itself may be improved, stability of a film formed therefrom may be expected. If, in Formula 1, in a case in which n is less than 3, flame retardancy is decreased while a boiling point is decreased as a molecule becomes smaller and an amount of a fluorine element is decreased, and high-temperature durability is decreased while it becomes vulnerable to electrochemical decomposition. Thus, gas generation and poor swelling characteristics may occur during high-temperature storage. Also, in Formula 1, in a case in which n is greater than 8, since viscosity and non-polarity of the material are increased as the fluorine element is excessively contained, solubility in the electrolyte is reduced, and thus, poor battery performance may be obtained.

Preferably, the compound represented by Formula 1 may include at least one of compounds represented by Formulae 1-1 and 1-2.

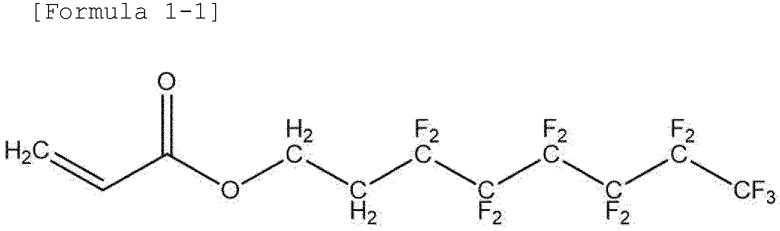

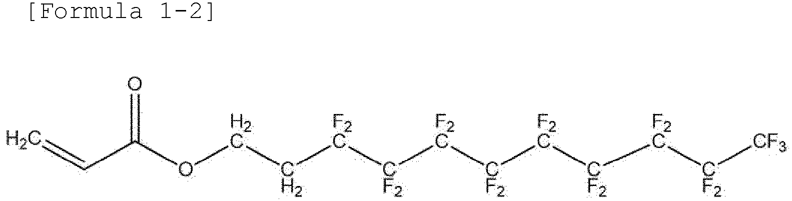

The compound represented by Formula 1 may form a robust SEI film containing a fluorine element on a surface of a negative electrode while a double bond (C=C) functional group included in its molecular structure causes an electrochemical reaction during an electrochemical decomposition reaction. Particularly, since the compound represented by Formula 1 contains a fluorine-substituted alkyl group having excellent flame retardancy and incombustibility which is included in the molecular structure, it may form a passivation film capable of securing excellent oxidation resistance on a surface of a positive electrode and may simultaneously act as a radical scavenger caused by the fluorine element. Thus, during charge and discharge operation, since a side reaction between the electrode and the electrolyte is controlled, a lithium secondary battery with improved room-temperature and low-temperature life characteristics may be provided.

Particularly, with respect to the compound represented by Formula 1, radicals are generated as a double bond of acrylate is reductively decomposed, and it may form a more robust SEI film while these radicals promote a decomposition reaction of cyclic carbonate and/or 1,3-propane sultone which are additives to be described later.

Since an acrylate functional group and the terminal fluorine-substituted alkyl group are connected through an ethylene group (-CH₂-CH₂-) in the compound represented by Formula 1 of the present disclosure, flexibility is relatively high due to an increase in a molecular chain of a linking group in comparison to a compound, in which an acrylate functional group and a terminal fluorine-substituted alkyl group are connected through a methylene group (-CH₂-), such as 2,2,3,3,4,4,4-heptafluorobutyl acrylate, and thus, a film with more improved durability may be formed on the surface of the negative electrode.

Also, as described above, since the compound represented by Formula 1 of the present disclosure includes two oxygen elements in the molecular structure and has structural characteristics in which the acrylate functional group and the terminal fluorine-substituted alkyl group are connected (bonded) through the ethylene group (-CH₂-CH₂-), it not only suppresses an increase in interfacial resistance by forming a low-resistance and robust SEI on the surface of the electrode before a side reaction occurs, but also prevents exposure of the surface of the electrode, and thus, it may suppress a side reaction between the electrode and the electrolyte. As a result, since high-temperature stability may be increased by effectively controlling dissolution of transition metal from the positive electrode due to film collapse, a cylindrical type lithium secondary battery capable of reducing a battery swelling phenomenon while having excellent high-temperature storage characteristics and high-temperature cycle characteristics may be achieved. With respect to a compound containing three or more oxygen elements in its molecular structure, since it becomes a cause of reducing oxidation safety, there is a disadvantage in that an effect is limited.

The compound represented by Formula 1 may be included in an amount of 0.5 wt% to 5.0 wt% based on a total amount of the electrolyte, and may more specifically be included in an amount of 0.5 wt% to 3.0 wt%.

In a case in which the amount of the compound represented by Formula 1 satisfies the above range, since the dissolution of the transition metal from the positive electrode at high temperatures may be effectively suppressed by forming a stable film, excellent high-temperature durability may be achieved. That is, in a case in which the amount of the compound represented by Formula 1 is less than 0.5 wt%, since a film-forming effect is insignificant, the SEI film is degraded during high-temperature storage, and thus, an increase in resistance and a reduction in capacity may be caused after high-temperature storage. Also, in a case in which the amount of the compound represented by Formula 1 is greater than 5.0 wt%, since an excessively thick film is formed during initial charge, the resistance is increased, and thus, degradation of output characteristics and initial capacity of the secondary battery may occur.

Also, the electrolyte of the present disclosure may further include a cyclic carbonate compound as an electrolyte additive together with the compound represented by Formula 1. That is, since the compound represented by Formula 1 is used in combination with the cyclic carbonate compound as the electrolyte additive, a more stable film may be formed while decomposition of the cyclic carbonate compound is promoted by a radical chemical reaction that is generated by the compound represented by Formula 1 when the film is formed by a reduction reaction of the cyclic carbonate compound. Since the more robust film may be formed by a synergistic effect of these two compounds, it may effectively improve high-temperature durability and capacity retention of the large-sized cylindrical type secondary battery.

The cyclic carbonate compound may include vinylene carbonate, vinylethylene carbonate, or a mixture thereof. In a case in which a mixture of vinylene carbonate and vinylethylene carbonate is included as the cyclic carbonate compound, the vinylene carbonate and the vinylethylene carbonate may be included in a weight ratio of 1:1 to 10:0.

Also, the electrolyte of the present disclosure may include 1,3-propane sultone as an additive for an effect of strengthening the film on the surface of the electrode.

The 1,3-propane sultone may form a robust film on the surface of the positive electrode as well as the negative electrode, wherein since this film has excellent durability, it may suppress an additional side reaction between the electrode and the electrolyte and may suppress an increase in resistance due to the side reaction.

The electrolyte of the present disclosure may include the compound of Formula 1, the cyclic carbonate compound, and the 1,3-propanesultone in a weight ratio of 1:0.5:0.2 to 1:20:10, specifically 1:0.5:0.2 to 1:10:8, and preferably 1:0.5:0.2 to 1:8:5.

In a case in which the amount ratio of the additives satisfies the above range, a more robust SEI film and a passive film may be formed on the surface of the electrode, an appropriate level of gas may be generated to control an internal pressure of a large-sized cylindrical type cell to be maintained in a specific range at the same time, and, as a result, since the electrolyte impregnability may be maximized, a cylindrical type lithium secondary battery capable of maintaining high safety even at high output may be provided.

The non-aqueous electrolyte of the present disclosure may further include other additives in order to prevent occurrence of collapse of the negative electrode due to decomposition of the non-aqueous electrolyte in a high output environment or to further improve low-temperature high rate discharge characteristics, high-temperature stability, overcharge prevention, and an effect of suppressing battery swelling at high temperature.

Typical examples of these other additives may include at least one additive for forming a SEI film which is selected from the group consisting of a halogen-substituted carbonate-based compound, a sulfate-based compound, a phosphate-based compound, a borate-based compound, a nitrile-based compound, a benzene-based compound, an amine-based compound, a silane-based compound, and a lithium salt-based compound.

The halogen-substituted carbonate-based compound may include fluoroethylene carbonate (FEC).

The sulfate-based compound may include ethylene sulfate (Esa), trimethylene sulfate (TMS), or methyl trimethylene sulfate (MTMS).

The phosphate-based compound may include at least one compound selected from the group consisting of lithium difluoro (bisoxalato)phosphate, lithium difluorophosphate, tetramethyl trimethyl silyl phosphate, trimethyl silyl phosphite, tris(2,2,2-trifluoroethyl)phosphate, and tris(trifluoroethyl)phosphite.

The borate-based compound may include tetraphenylborate, lithium oxalyldifluoroborate (LiODFB), and lithium bis(oxalato)borate (LiB(C₂O₄)₂, LiBOB).

The nitrile-based compound may include at least one compound selected from the group consisting of succinonitrile, adiponitrile, acetonitrile, propionitrile, butyronitrile, valeronitrile, caprylonitrile, heptanenitrile, cyclopentane carbonitrile, cyclohexane carbonitrile, 2-fluorobenzonitrile, 4-fluorobenzonitrile, difluorobenzonitrile, trifluorobenzonitrile, phenylacetonitrile, 2-fluorophenylacetonitrile, and 4-fluorophenylacetonitrile.

The benzene-based compound may include fluorobenzene, the amine-based compound may include triethanolamine or ethylenediamine, and the silane-based compound may include tetravinylsilane.

The lithium salt-based compound is a compound different from the lithium salt included in the non-aqueous electrolyte, wherein the lithium salt-based compound may include lithium difluorophosphate (LiDFP), LiPO₂F₂, or LiBF₄.

Two or more other additives may be mixed and used, and the additives may be included in an amount of less than 10 wt%, particularly 0.01 wt% or more to less than 8.0 wt%, and preferably 0.05 wt% to 5.0 wt% based on a total weight of the electrolyte. If the amount of the other additives satisfies the above range, a side reaction caused by unreacted additives may be suppressed, and effects of improving low-temperature output, high-temperature storage characteristics, and high-temperature life characteristics of the battery may be further improved.

### (B) Battery Can

In FIG. 3, the battery can 142 is electrically connected to a non-coating portion 146b of the negative electrode plate, and functions as a negative electrode terminal that contacts an external power source to transfer a current applied from the external power source to the negative electrode plate.

If necessary, a beading portion 147 and a crimping portion 148 may be included at an upper end of the battery can 142. The beading portion 147 may be formed by pressing an outer circumferential surface of the battery can 142 to a distance D1. The beading portion 147 prevents the electrode assembly 141 accommodated inside the battery can 142 from escaping through the upper end opening of the battery can 142, and may function as a support on which the sealing body 143 is stably placed.

The crimping portion 148 may be formed on an upper portion of the beading portion 147 and has an extended and bent shape to surround an outer circumferential surface of a cap plate 143a disposed on the beading portion 147 and a portion of an upper surface of the cap plate 143a.

Next, the sealing body 143 is for sealing the open end of the battery can 142, wherein it includes the cap plate 143a and a first gasket 143b providing airtightness between the cap plate 143a and the battery can 142 and having insulation properties, and, if necessary, may further include a connection plate 143c electrically and mechanically bonded to the cap plate 143a. The cap plate 143a may be pressed onto the beading portion 147 formed in the battery can 142 and may be fixed by the crimping portion 148.

The cap plate 143a is a component formed of a conductive metallic material, wherein it covers the upper end opening of the battery can 142. The cap plate 143a is electrically connected to the positive electrode plate of the electrode assembly 141, and is electrically insulated from the battery can 142 through the first gasket 143b. Thus, the cap plate 143a may function as a positive electrode terminal of the cylindrical type secondary battery. The cap plate 143a may include a protrusion 143d protruding upward from the center C, and the protrusion 143d may contact an external power source to allow a current to be applied from the external power source.

The first gasket 143b may be disposed between the cap plate 143a and the crimping portion 148 to secure airtightness of the battery can 142 and to electrically insulate the battery can 142 and the cap plate 143a.

The cylindrical type battery 140 according to the present disclosure may further include current collecting plates 144 and 145, if necessary. The current collecting plates are respectively bonded to a non-coating portion 146a of the positive electrode plate and the non-coating portion 146b of the negative electrode plate, and connected to the electrode terminals (i.e., the positive electrode terminal and the negative electrode terminal).

Specifically, the cylindrical type battery 140 according to the present disclosure may include the first current collecting plate 144 bonded to an upper portion of the electrode assembly 141 and the second current collecting plate 145 bonded to a lower portion of the electrode assembly 141.

The first current collecting plate 144 and/or the second current collecting plate 145 may be further included.

The first current collecting plate 144 is bonded to the upper portion of the electrode assembly 141. The first current collecting plate 144 is formed of a conductive metallic material, such as aluminum, copper, and nickel, and is electrically connected to the non-coating portion 146a of the positive electrode plate. A lead 149 may be connected to the first current collecting plate 144. The lead 149 may extend upward from the electrode assembly 141 and may be bonded to the connection plate 143c or may be directly bonded to a lower surface of the cap plate 143a. The lead 149 and other components may be bonded through welding. Preferably, the first current collecting plate 144 may be formed in one piece with the lead 149. In this case, the lead 149 may have a long plate shape extending outward from a center of the first current collecting plate 144.

The first current collecting plate 144 is bonded to an end of the non-coating portion 146a of the positive electrode plate, and the bonding, for example, may be performed by a method such as laser welding, resistance welding, ultrasonic welding, and soldering.

The second current collecting plate 145 is bonded to the lower portion of the electrode assembly 141. The second current collecting plate 145 is formed of a conductive metallic material, such as aluminum, copper, and nickel, and is electrically connected to the non-coating portion 146b of the negative electrode plate. One surface of the second current collecting plate 145 may be bonded to the non-coating portion 146b of the negative electrode plate, and an opposite surface may be bonded to an inner bottom surface of the battery can 142. In this case, the bonding may be performed by a method such as laser welding, resistance welding, ultrasonic welding, and soldering.

The cylindrical type battery 140 according to the present disclosure may further include an insulator 146, if necessary. The insulator 146 may be disposed to cover an upper surface of the first current collecting plate 144. Since the insulator 146 covers the first current collecting plate 144, a direct contact between the first current collecting plate 144 and an inner circumferential surface of the battery can 142 may be prevented.

The insulator 146 includes a lead hole 151 so that the lead 149 extending upward from the first current collecting plate 144 may be drawn out. The lead 149 is drawn upward through the lead hole 151 and bonded to a lower surface of the connection plate 143c or the lower surface of the cap plate 143a.

The insulator 146 may be formed of an insulating polymer resin, for example, a polymer resin material such as polyethylene, polypropylene, polyimide, or polybutylene terephthalate.

The cylindrical type battery 140 according to the present disclosure may further include a venting portion 152 formed on the lower surface of the battery can 142, if necessary. The venting portion 152 corresponds to a region having a thinner thickness than a surrounding region in the lower surface of the battery can 142. Since the venting portion 152 is thin, it is structurally weaker than the surrounding region. Thus, if a pressure in the cylindrical type battery 140 is increased to a certain level or higher, the venting portion 152 is ruptured and gas in the battery can 152 may be discharged to the outside to prevent explosion of the battery.

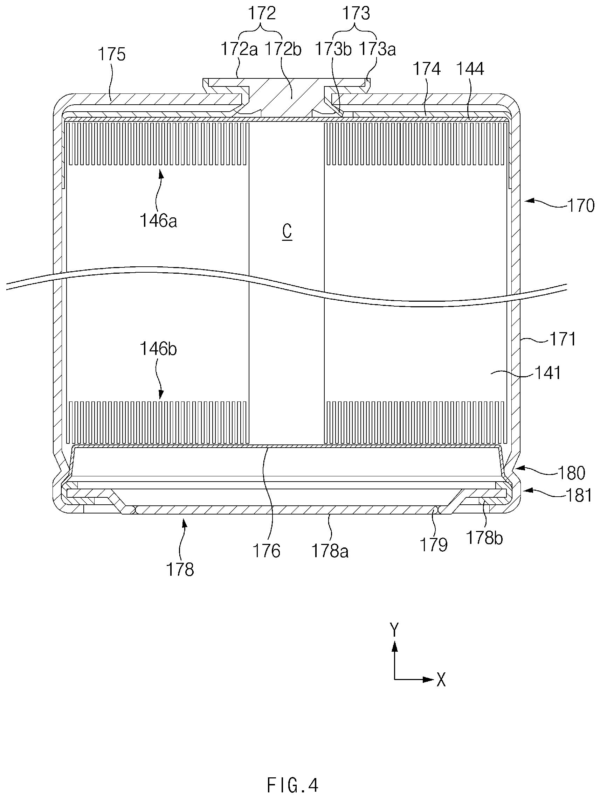

A cross-sectional view of a cylindrical type battery having a tab-less-structure according to another embodiment of the present disclosure is illustrated in FIG. 4. Hereinafter, the cylindrical type battery according to the another embodiment of the present disclosure will be described with reference to FIG. 4. However, FIG. 4 only shows one embodiment of the present disclosure, and the structure of the cylindrical type battery of the present disclosure is not limited to the scope disclosed in FIG. 4.

Referring to FIG. 4, a cylindrical type battery 170 according to another embodiment of the present disclosure has different structures of battery can and sealing body in comparison to the cylindrical type battery 140 illustrated in FIG. 3 and has substantially the same configurations of electrode assembly and electrolyte.

Specifically, the cylindrical type battery 170 includes a battery can 171 through which a rivet terminal 172 is installed. The rivet terminal 172 is installed on a closed surface (upper surface in the drawing) partially closed at one end of the battery can 171. The rivet terminal 172 is riveted to a through hole (first opening of a first end) of the battery can 171 in a state in which an insulating second gasket 173 is disposed therebetween. The rivet terminal 172 is exposed to the outside in a direction opposite to a direction of gravity.

The rivet terminal 172 includes a terminal exposed portion 172a and a terminal insertion portion 172b. The terminal exposed portion 172a is exposed to the outside of the closed surface of the battery can 171. The terminal exposed portion 172a may be located at approximately a center of the partially closed surface of the battery can 171. A maximum diameter of the terminal exposed portion 172a may be formed to be greater than a maximum diameter of the through hole formed in the battery can 171. The terminal insertion portion 172b may be electrically connected to the non-coating portion 146a of the positive electrode plate through approximately the center of the closed surface of the battery can 171. The terminal insertion portion 172b may be riveted on an inner surface of the battery can 171. That is, an end of the terminal insertion portion 172b may have a shape curved toward the inner surface of the battery can 171. A maximum diameter of the end of the terminal insertion portion 172b may be greater than the maximum diameter of the through hole of the battery can 171.

A lower end surface of the terminal insertion portion 172b may be welded to the first current collecting plate 144 connected to the non-coating portion 146a of the positive electrode plate. An insulating cap 174 formed of an insulating material may be disposed between the first current collecting plate 144 and the inner surface of the battery can 171. The insulating cap 174 covers an upper portion of the first current collecting plate 144 and an upper edge portion of the electrode assembly 141. Thus, it may prevent a short circuit from being caused by contact between an outer circumferential non-coating portion B3 of the electrode assembly 141 and the inner surface of the battery can 171 having a different polarity. The terminal insertion portion 172b of the rivet terminal 172 may pass through the insulating cap 174 to be welded to the first collector plate 144.

The second gasket 173 is disposed between the battery can 171 and the rivet terminal 172 to prevent an electrical contact between the battery can 171 and the rivet terminal 172 which have opposite polarities to each other. Thus, the upper surface having a substantially flat shape of the battery can 171 may function as a positive electrode terminal of the cylindrical type battery 170.

The second gasket 173 includes a gasket exposed portion 173a and a gasket insertion portion 173b. The gasket exposed portion 173a is disposed between the terminal exposed portion 172a of the rivet terminal 172 and the battery can 171. The gasket insertion portion 173b is disposed between the terminal insertion portion 172b of the rivet terminal 172 and the battery can 171. The gasket insertion portion 173b may be closely attached to the inner surface of the battery can 171 by being deformed together during the riveting of the terminal insertion portion 172b. The second gasket 173, for example, may be formed of a polymer resin having insulation properties.

The gasket exposed portion 173a of the second gasket 173 may have an extended shape to cover an outer circumferential surface of the terminal exposed portion 172a of the rivet terminal 172. In a case in which the second gasket 173 covers the outer circumferential surface of the rivet terminal 172, occurrence of a short circuit in a process of bonding an electrical connection component, such as a bus bar, to the upper surface of the battery can 171 and/or to the rivet terminal 172 may be prevented. Although not shown in the drawing, the gasket exposed portion 173a may have an extended shape to cover not only the outer circumferential surface of the terminal exposed portion 172a but also a portion of an upper surface thereof.

In a case in which the second gasket 173 is formed of the polymer resin, the second gasket 173 may be bonded to the battery can 171 and the rivet terminal 172 by heat fusion. In this case, airtightness at a bonding interface between the second gasket 173 and the rivet terminal 172 and at a bonding interface between the second gasket 173 and the battery can 171 may be enhanced. In a case in which the gasket exposed portion 173a of the second gasket 173 has a shape extending to the upper surface of the terminal exposed portion 172a, the rivet terminal 172 may be integrally bonded to the second gasket 173 by insert injection molding.

A region 175 other than regions occupied by the rivet terminal 172 and the second gasket 173 in the upper surface of the battery can 171 corresponds to a negative electrode terminal having a polarity opposite to that of the rivet terminal 172.

A second current collecting plate 176 is bonded to the lower portion of the electrode assembly 141. The second current collecting plate 176 is formed of a conductive metallic material, such as aluminum, steel, copper, and nickel, and is electrically connected to the non-coating portion 146b of the negative electrode plate.

Preferably, the second current collecting plate 176 is electrically connected to the battery can 171. For this purpose, at least a portion of an edge portion of the second current collecting plate 176 may be fixed by being disposed between the inner surface of the battery can 171 and the first gasket 178b. In one example, the at least a portion of the edge portion of the second current collecting plate 176 may be fixed to a beading portion 180 by welding while being supported on a lower end surface of the beading portion 180 formed at a lower end of the battery can 171. In a modified example, the at least a portion of the edge portion of the second current collecting plate 176 may be directly welded to an inner wall surface of the battery can 171.

The second current collecting plate 176 may have a plurality of irregularities (not shown) which are radially formed on a surface facing the non-coating portion 146b. In a case in which the irregularities are formed, the second current collecting plate 176 may be pressed to press the irregularities into the non-coating portion 146b.

Preferably, the second current collecting plate 176 and an end of the non-coating portion 146b may be bonded by welding, for example, laser welding.

A sealing body 178 sealing a lower open end of the battery can 171 includes a cap plate 178a and a first gasket 178b. The first gasket 178b electrically separates the cap plate 178a and the battery can 171. A crimping portion 181 fixes an edge of the cap plate 178a and the first gasket 178b together. A venting portion 179 is included in the cap plate 178a. A configuration of the venting portion 179 is substantially the same as that of the above-described embodiment.

Preferably, the cap plate 178a is formed of a conductive metallic material. However, since the first gasket 178b is disposed between the cap plate 178a and the battery can 171, the cap plate 178a has no electrical polarity. The sealing body 178 functions to seal the lower open end of the battery can 171 and to discharge gas when an internal pressure of the battery cell 170 is increased above a critical value.

Preferably, the rivet terminal 172 electrically connected to the non-coating portion 146a of the positive electrode plate is used as the positive electrode terminal. Also, the portion 175 excluding the rivet terminal 172 in the upper surface of the battery can 171, which is electrically connected to the non-coating portion 146b of the negative electrode plate through the second current collecting plate 176, is used as the negative electrode terminal. As described above, in a case in which the two electrode terminals are disposed on the upper portion of the cylindrical type battery, it is possible to dispose electrical connection components, such as a bus bar, on only one side of the cylindrical type battery 170. This may lead to simplification of a battery pack structure and improvement of energy density. Furthermore, since the portion 175 used as the negative electrode terminal has a substantially flat shape, a sufficient bonding area may be secured for bonding the electrical connection components such as a bus bar. Accordingly, the cylindrical type battery 170 may reduce resistance at a bonding portion of the electrical connection component to a desired level.

In a case in which a cylindrical type lithium secondary battery is formed in a tab-less structure as described above, since the battery having the tab-less structure has less current concentration than a conventional battery having electrode tabs, it may effectively reduce heat generation in the battery, and, accordingly, an effect of improving thermal stability of the battery may be obtained.

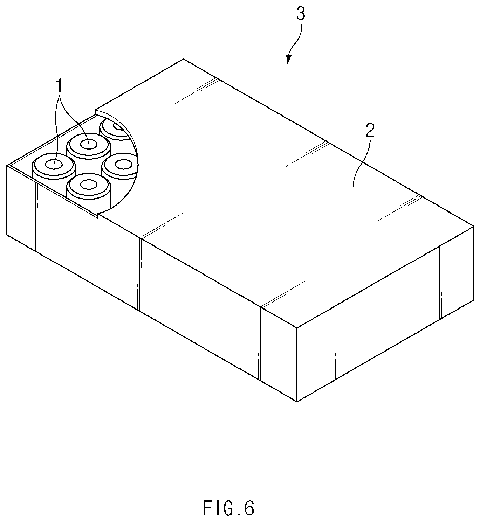

The cylindrical type lithium secondary battery of the present disclosure as described above may be used to prepare a battery pack. A configuration of a battery pack according to an embodiment of the present disclosure is schematically illustrated in FIG. 6. Referring to FIG. 6, a battery pack 3 according to an embodiment of the present disclosure includes an assembly, in which cylindrical type secondary batteries 1 are electrically connected, and a pack housing 2 accommodating the assembly. The cylindrical type secondary battery 1 is the battery cell according to the above-described embodiment. In the drawing, for convenience of illustration, parts, such as a bus bar for electrically connecting the cylindrical type secondary batteries 1, a cooling unit, and an external terminal, are omitted.

The battery pack 3 may be mounted in a vehicle. The vehicle, for example, may be an electric vehicle, a hybrid vehicle, or a plug-in hybrid vehicle. The vehicle includes a four-wheeled vehicle or a two-wheeled vehicle.

Hereinafter, the present disclosure will be described in more detail, according to specific examples.

### Example 1

### (Electrolyte Preparation)

After LiPF₆ was dissolved in a non-aqueous organic solvent, in which ethylene carbonate (EC), ethylmethyl carbonate (EMC), and dimethyl carbonate (DMC) were mixed in a volume ratio of 20:5:75, such that a concentration of the LiPF₆ was 1.3 M, 0.5 wt% of the compound represented by Formula 1-2, 2.0 wt% of vinylene carbonate (VC), 1.0 wt% of 1,3-propane sultone (PS), and 0.2 wt% of adiponitrile (AD), 0.2 wt% of succinonitrile, and 0.3 wt% of lithium difluorophosphate (hereinafter, referred to as "LiDFP"), as other additives, were added thereto to prepare an electrolyte (see Table 1 below).

### (Secondary Battery Preparation)

A positive electrode slurry was prepared by adding and mixing a positive electrode active material (Li[Ni_{0.9}Co_{0.06}Mn_{0.03}Al_{0.01}]O₂), which was in the form of a single particle and had a unimodal particle size distribution with an average particle diameter D₅₀ of 3 µm, carbon nanotubes, and a PVDF binder in a weight ratio of 97.8:0.6:1.6 in N-methyl pyrrolidone. One surface of an aluminum current collector sheet was coated with the positive electrode slurry, dried at 120°C, and then rolled to prepare a positive electrode plate.

A negative electrode active material (graphite and SiO = 95:5 weight ratio), a conductive agent (super C), a styrenebutadiene rubber (SBR), and carboxymethyl cellulose (CMC) were added to water in a weight ratio of 96:2:1.5:0.5 and mixed to prepare a negative electrode slurry. One surface of a copper current collector sheet was coated with the negative electrode slurry, dried at 150°C, and then rolled to prepare a negative electrode plate.

A separator was disposed between the above-prepared positive electrode plate and negative electrode plate such that they are stacked in the order of the separator/the positive electrode plate/the separator/the negative electrode plate and then wound to prepare an electrode assembly (diameter of core portion: 7 mm). After the electrode assembly prepared as described above was inserted into a cylindrical battery can, the electrolyte was injected to prepare a 4680 cell (form factor ratio: 0.58).

### Example 2.

### (Electrolyte Preparation)

After LiPF₆ was dissolved in a non-aqueous organic solvent, in which ethylene carbonate (EC), ethylmethyl carbonate (EMC), and dimethyl carbonate (DMC) were mixed in a volume ratio of 20:5:75, such that a concentration of the LiPF₆ was 1.3 M, 1.0 wt% of the compound represented by Formula 1-2, 2.0 wt% of vinylene carbonate (VC), 1.0 wt% of 1,3-propane sultone (PS), and 0.2 wt% of adiponitrile (AD), 0.2 wt% of succinonitrile, and 0.3 wt% of LiDFP, as other additives, were added thereto to prepare an electrolyte (see Table 1 below).

### (Secondary Battery Preparation)

A 4680 cell (form factor ratio: 0.58) was prepared in the same manner as in Example 1 except that the above-prepared electrolyte was injected.

### Example 3.

After LiPF₆ was dissolved in a non-aqueous organic solvent, in which ethylene carbonate (EC), ethylmethyl carbonate (EMC), and dimethyl carbonate (DMC) were mixed in a volume ratio of 20:5:75, such that a concentration of the LiPF₆ was 1.3 M, 3.0 wt% of the compound represented by Formula 1-2, 3.0 wt% of vinylene carbonate (VC), 1.0 wt% of 1,3-propane sultone (PS), and 0.2 wt% of adiponitrile (AD), 0.2 wt% of succinonitrile, and 0.3 wt% of LiDFP, as other additives, were added thereto to prepare an electrolyte (see Table 1 below).

### (Secondary Battery Preparation)

A 4680 cell (form factor ratio: 0.58) was prepared in the same manner as in Example 1 except that the above-prepared electrolyte was injected.

### Example 4.

After LiPF₆ was dissolved in a non-aqueous organic solvent, in which ethylene carbonate (EC), ethylmethyl carbonate (EMC), and dimethyl carbonate (DMC) were mixed in a volume ratio of 20:5:75, such that a concentration of the LiPF₆ was 1.3 M, 3.0 wt% of the compound represented by Formula 1-2, 4.5 wt% of vinylene carbonate (VC), 3.0 wt% of 1,3-propane sultone (PS), and 0.2 wt% of adiponitrile (AD), 0.2 wt% of succinonitrile, and 0.3 wt% of LiDFP, as other additives, were added thereto to prepare an electrolyte (see Table 1 below).

### (Secondary Battery Preparation)

A 4680 cell (form factor ratio: 0.58) was prepared in the same manner as in Example 1 except that the above-prepared electrolyte was injected.

### Comparative Example 1.

After LiPF₆ was dissolved in a non-aqueous organic solvent, in which ethylene carbonate (EC), ethylmethyl carbonate (EMC), and dimethyl carbonate (DMC) were mixed in a volume ratio of 20:5:75, such that a concentration of the LiPF₆ was 1.3 M, 2.0 wt% of vinylene carbonate (VC), 1.0 wt% of 1,3-propane sultone (PS), and 0.2 wt% of adiponitrile (AD), 0.2 wt% of succinonitrile, and 0.3 wt% of LiDFP, as other additives, were added thereto to prepare an electrolyte (see Table 1 below).

### (Secondary Battery Preparation)

A 4680 cell (form factor ratio: 0.58) was prepared in the same manner as in Example 1 except that the above-prepared electrolyte was injected.

### Comparative Example 2.

After LiPF₆ was dissolved in a non-aqueous organic solvent, in which ethylene carbonate (EC), ethylmethyl carbonate (EMC), and dimethyl carbonate (DMC) were mixed in a volume ratio of 20:5:75, such that a concentration of the LiPF₆ was 1.3 M, 0.1 wt% of the compound represented by Formula 1-2, 2.0 wt% of vinylene carbonate (VC), 1.0 wt% of 1,3-propane sultone (PS), and 0.2 wt% of adiponitrile (AD), 0.2 wt% of succinonitrile, and 0.3 wt% of LiDFP, as other additives, were added thereto to prepare an electrolyte (see Table 1 below).

### (Secondary Battery Preparation)

A 4680 cell (form factor ratio: 0.58) was prepared in the same manner as in Example 1 except that the above-prepared electrolyte was injected.

### Comparative Example 3.

After LiPF₆ was dissolved in a non-aqueous organic solvent, in which ethylene carbonate (EC), ethylmethyl carbonate (EMC), and dimethyl carbonate (DMC) were mixed in a volume ratio of 20:5:75, such that a concentration of the LiPF₆ was 1.3 M, 1.0 wt% of the compound represented by Formula 1-2, 2.0 wt% of vinylene carbonate (VC), 0.1 wt% of 1,3-propane sultone (PS), and 0.2 wt% of adiponitrile (AD), 0.2 wt% of succinonitrile, and 0.3 wt% of LiDFP, as other additives, were added thereto to prepare an electrolyte (see Table 1 below).

### (Secondary Battery Preparation)

A 4680 cell (form factor ratio: 0.58) was prepared in the same manner as in Example 1 except that the above-prepared electrolyte was injected.

### Comparative Example 4.

After LiPF₆ was dissolved in a non-aqueous organic solvent, in which ethylene carbonate (EC), ethylmethyl carbonate (EMC), and dimethyl carbonate (DMC) were mixed in a volume ratio of 20:5:75, such that a concentration of the LiPF₆ was 1.3 M, 0.3 wt% of the compound represented by Formula 1-2, 2.0 wt% of vinylene carbonate (VC), 4.5 wt% of 1,3-propane sultone (PS), and 0.2 wt% of adiponitrile (AD), 0.2 wt% of succinonitrile, and 0.3 wt% of LiDFP, as other additives, were added thereto to prepare an electrolyte (see Table 1 below).

### (Secondary Battery Preparation)

A 4680 cell (form factor ratio: 0.58) was prepared in the same manner as in Example 1 except that the above-prepared electrolyte was injected.

### Comparative Example 5.

After LiPF₆ was dissolved in a non-aqueous organic solvent, in which ethylene carbonate (EC), ethylmethyl carbonate (EMC), and dimethyl carbonate (DMC) were mixed in a volume ratio of 20:5:75, such that a concentration of the LiPF₆ was 1.3 M, 5.5 wt% of the compound represented by Formula 1-2, 2.0 wt% of vinylene carbonate (VC), 1.0 wt% of 1,3-propane sultone (PS), and 0.2 wt% of adiponitrile (AD), 0.2 wt% of succinonitrile, and 0.3 wt% of LiDFP, as other additives, were added thereto to prepare an electrolyte (see Table 1 below).

### (Secondary Battery Preparation)

A 4680 cell (form factor ratio: 0.58) was prepared in the same manner as in Example 1 except that the above-prepared electrolyte was injected.

### Comparative Example 6.

### (Secondary Battery Preparation)

The electrode assembly (diameter of core portion: 7 mm) prepared in Example 1 was inserted into a cylindrical battery can, and the electrolyte prepared in Example 1 was then injected to prepare a 21700 cell (form factor ratio: 0.03).

**[Table 1]**

| | Compound of Formula 1 | | Cyclic carbonate compound | | PS conte nt (wt%) | Other addit ives conte nt (wt%) | Weight ratio of compound of Formula 1: cyclic carbonate compound: PS | Form facto r ratio of cell |
|---|---|---|---|---|---|---|---|---|
| | Type | Cont ent (wt% ) | Type | Cont ent (wt% ) | | | | |
| Example 1 | Formula 1-2 | 0.5 | VC | 2.0 | 1.0 | 0.7 | 1:4:2 | 0.58 |
| Example 2 | Formula 1-2 | 1.0 | VC | 2.0 | 1.0 | 0.7 | 1:2:1 | 0.58 |
| Example 3 | Formula 1-2 | 3.0 | VC | 3.0 | 1.0 | 0.7 | 1:1:0.33 | 0.58 |
| Example 4 | Formula 1-2 | 3.0 | VC | 4.5 | 3.0 | 0.7 | 1:1.5:1 | 0.58 |
| Comparative Example 1 | - | - | VC | 2.0 | 1.0 | 0.7 | 0:2:1 | 0.58 |
| Comparative Example 2 | Formula 1-2 | 0.1 | VC | 2.0 | 1.0 | 0.7 | 1:20:10 | 0.58 |
| Comparative Example 3 | Formula 1-2 | 1.0 | VC | 2.0 | 0.1 | 0.7 | 1:2:0.1 | 0.58 |
| Comparative Example 4 | Formula 1-2 | 0.3 | VC | 2.0 | 4.5 | 0.7 | 1:6.67:15 | 0.58 |
| Comparative Example 5 | Formula 1-2 | 5.5 | VC | 2.0 | 1.0 | 0.7 | 1:0.36:0. 18 | 0.58 |
| Comparative Example 6 | Formula 1-2 | 0.5 | VC | 2.0 | 1.0 | 0.7 | 1:4:2 | 0.03 |

### [Experimental Examples]

### Experimental Example 1. Gas Generation Amount Evaluation

Each of the cells prepared in Example 1 and Comparative Example 1 was activated by constant current-constant voltage charging the cell at 0.33C C-rate to 4.0 V at room temperature and discharging the cell at 0.2C C-rate to 2.5 V. Subsequently, after gas in the cell was collected, a gas generation amount was measured through gas chromatography-mass spectrometry (GC-MS) analysis (BGA-10).

A gas generation amount of Comparative Example 1 was set to 100%, and a volume change rate of Example 1 was calculated as a relative value of Comparative Example 1 to present the value in Table 2 below.

**[Table 2]**

| | Gas generation amount (%) |
|---|---|
| Example 1 | 82.0 |
| Comparative Example 1 | 100.0 |

Referring to Table 2, with respect to the cell of Example 1, it may be confirmed that, although a total additive content was higher than that of Comparative Example 1, the amount of gas generated in the cell was reduced.

### Experimental Example 2. Initial Capacity and Initial Resistance Evaluation

### (1) Initial Discharge Energy (Wh) Evaluation

Each of the cells prepared in Examples 1 to 4 and Comparative Examples 2, 4, and 5 was fully charged under constant current-constant voltage conditions at 0.33C C-rate to 4.0 V at room temperature, and then discharged at 0.2C C-rate to 2.5 V to measure discharge energy, and the results thereof are presented in Table 3 below.

### (2) Initial DC Resistance Evaluation

After each of the cells prepared in Examples 1 to 4 and Comparative Examples 2, 4, and 5 was constant current-constant voltage charged at 0.33C C-rate to a state of charge (SOC) of 50% at room temperature, initial DC resistance was calculated using a voltage difference when the cell was discharged at 0.5C C-rate for 10 seconds at an SOC of 50%, and the results thereof are presented in Table 3 below.

**[Table 3]**

| | Initial discharge energy | Initial DC resistance |
|---|---|---|
| Example 1 | 101.13 | 95.23 |
| Example 2 | 100.92 | 95.61 |
| Example 3 | 100.82 | 95.99 |
| Example 4 | 100.10 | 98.78 |
| Comparative Example 2 | 99.90 | 99.48 |
| Comparative Example 4 | 97.85 | 104.48 |
| Comparative Example 5 | 98.1 | 110.5 |

As illustrated in Table 3, with respect to the cells of Examples 1 to 4, it may be confirmed that initial discharge energies were improved and initial resistances were mostly reduced in comparison to those of the cells of Comparative Examples 2, 4, and 5.

Based on these results, in a case in which three types of additives were included in a specific composition ratio, it may be confirmed that since electrolyte impregnability was improved as gas generation was controlled to reduce an internal pressure of the cell, the initial resistance was reduced.

### Experimental Example 3. Discharge Capacity by C-rate

After each of the cells prepared in Examples 1 to 4 and Comparative Examples 1 to 5 was constant current-constant voltage charged at 0.33C C-rate to 4.2 V at room temperature, discharge capacity retention was calculated by discharging the cell to 2.5 V while changing the current to 1C C-rate and 2C C-rate, and the results thereof are then presented in Table 4 below.

**[Table 4]**

| | 1C C-rate discharge capacity retention (%) | 2C C-rate discharge capacity retention (%) |
|---|---|---|
| Example 1 | 99.24 | 98.09 |
| Example 2 | 98.47 | 97.71 |
| Example 3 | 98.09 | 96.95 |
| Example 4 | 98.85 | 97.33 |
| Comparative Example 1 | 97.33 | 95.42 |
| Comparative Example 2 | 93.89 | 83.97 |
| Comparative Example 3 | 94.23 | 78.75 |
| Comparative Example 4 | 96.18 | 93.89 |
| Comparative Example 5 | 96.56 | 94.66 |

As illustrated in Table 4, with respect to the cells of Examples 1 to 4, it may be understood that discharge capacity retentions were all improved in comparison to those of the cells of Comparative Examples 1 to 5.

### Experimental Example 4. High-temperature Cycle Capacity Retention Evaluation

After each of the cells prepared in Examples 1 to 3 and Comparative Examples 2 to 6 was constant current-constant voltage charged at 0.33C C-rate to 4.2 V at room temperature (25°C) and then discharged at 0.2C C-rate to 2.5 V, initial capacity was measured. Subsequently, constant current-constant voltage charging at 0.33C C-rate to 4.2 V at a high temperature (40°C) and then discharging at 0.2C C-rate to 2.5 V were set as one cycle, and 100 cycles of charging and discharging were performed. Capacity retention after 100 cycles at 40°C relative to the initial capacity after 1 cycle was measured, and the results thereof are then presented in Table 5 below.

**[Table 5]**

| | Capacity retention after 100 cycles (%) |
|---|---|
| Example 1 | 101.66 |
| Example 2 | 101.56 |
| Example 3 | 101.52 |
| Comparative Example 2 | 99.67 |
| Comparative Example 3 | 90.22 |
| Comparative Example 4 | 100.55 |
| Comparative Example 5 | 87.75 |
| Comparative Example 6 | 88.50 |

As illustrated in Table 5, with respect to the cells of Examples 1 to 3, it may be understood that high-temperature cycle capacity retentions were all improved in comparison to those of the cells of Comparative Examples 2 to 6.

Particularly, with respect to the cell of Comparative Example 6 with a different form factor, in a case in which an electrolyte solution of the same additive composition was used, since electrolyte impregnability was reduced due to difficulty in controlling an internal pressure of the cell, it may be understood that high-temperature cycle capacity retention was significantly reduced in comparison to those of the cells of Examples 1 to 3.

### Experimental Example 5. Thermal Stability Evaluation

Ignition temperature was measured while each of the cells prepared in Examples 1 to 3 and Comparative Examples 1 to 6 was heated at a rate of 2°C per minute. In this case, the ignition temperature of Comparative Example 1 was set to "0", ignition temperature values of the cells of Examples 1 to 3 and Comparative Examples 2 to 6 were calculated as relative values of the cell of Comparative Example 1, and results thereof are presented in Table 6 below.

**[Table 6]**

| | Ignition temperature (°C) |
|---|---|
| Example 1 | + 10 |
| Example 2 | + 12 |
| Example 3 | + 14 |
| Comparative Example 1 | 0 |
| Comparative Example 2 | 0 |
| Comparative Example 3 | + 3 |
| Comparative Example 4 | + 1 |
| Comparative Example 5 | + 4 |
| Comparative Example 6 | + 5 |

As illustrated in Table 6, with respect to the cells of Examples 1 to 3, since stability was improved as the electrolyte impregnability was improved, it may be understood that ignition occurred at a higher temperature than the cells of Comparative Examples 1 to 6.

### Description of the Symbols

10: Positive Electrode Plate
11: Negative Electrode Plate
12: Separator
20: Current Collector
21, 21a: Active Material Layer
22, 22a, 22c, 146b: Non-coating Portion
24: Insulation Layer
140, 170: Cylindrical Type Battery
141: Electrode Assembly
142, 171: Battery Can
143, 178: Sealing Body
144: First Current Collecting Plate
145, 176: Second Current Collecting Plate
146a: Non-coating Portion of the Positive Electrode Plate
146b: Non-coating Portion of the Negative Electrode Plate
146: Insulator
152: Venting Portion
172: Rivet Terminal
173: Second Gasket
173a: Gasket Exposed Portion
173b: Gasket Insertion Portion
147, 180: Beading Portion
148: Crimping Portion
149: Lead
172a: Terminal Exposed Portion
173b: Terminal Insertion Portion
174: Insulating Cap
178b: First Gasket
180: Beading Portion

## Claims

1. A cylindrical type lithium secondary battery comprising:
an electrode assembly in which a positive electrode plate, a negative electrode plate, and a separator disposed between the positive electrode plate and the negative electrode plate are wound in one direction; a battery can in which the electrode assembly is accommodated; an electrolyte injected into the battery can; and a sealing body sealing an open end of the battery can,
wherein the positive electrode plate and the negative electrode plate each comprise a non-coating portion on which an active material layer is not formed, and each have a structure in which at least a portion of the non-coating portion of the positive electrode plate or the negative electrode plate defines an electrode tab,
the cylindrical type lithium secondary battery has a form factor ratio of 0.4 or more,
a core portion of the electrode assembly has a diameter of 5 mm to 8 mm, and
the electrolyte comprises a lithium salt, a non-aqueous organic solvent, and an additive,
wherein the additive comprises a compound represented by Formula 1, a cyclic carbonate compound, and 1,3-propane sultone,
the compound represented by Formula 1 is included in an amount of 0.5 wt% to 5.0 wt% based on a total amount of the electrolyte, and
the compound represented by Formula 1, the cyclic carbonate compound, and the 1,3-propanesultone are included in a weight ratio of 1:0.5:0.2 to 1:20:10: 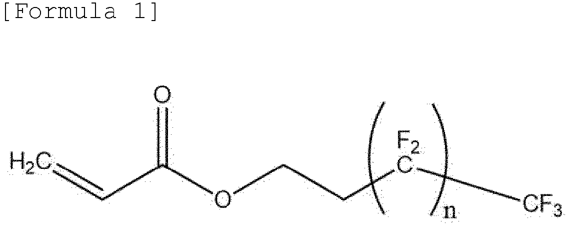
wherein, in Formula 1,
n is an integer of 3 to 10.

2. The cylindrical type lithium secondary battery of claim 1, wherein the positive electrode plate comprises a positive electrode active material having an amount of nickel (Ni) among metallic elements excluding lithium of 80 mol% or more.

3. The cylindrical type lithium secondary battery of claim 2, wherein the positive electrode active material is a lithium nickel-based oxide represented by [Formula 2].
[Formula 2] LiₐNi_{b}Co_{c}M¹_{d}M²ₑO₂
wherein, in Formula 2,
M¹ is manganese (Mn), aluminum (Al), or a combination thereof,
M² is at least one selected from the group consisting of zirconium (Zr), tungsten (W), yttrium (Y), barium (Ba), calcium (Ca), titanium (Ti), magnesium (Mg), tantalum (Ta), and niobium (Nb), and 0.8≤a≤1.2, 0.85≤b<1, 0<c<0.15, 0<d<0.15, and 0≤e≤0.1.

4. The cylindrical type lithium secondary battery of claim 1, wherein the positive electrode plate comprises a positive electrode active material which is composed of a single particle, a pseudo-single particle, and or a combination thereof.

5. The cylindrical type lithium secondary battery of claim 1, wherein the negative electrode plate comprises a silicon-based negative electrode active material and a carbon-based negative electrode active material.

6. The cylindrical type lithium secondary battery of claim 5, wherein the silicon-based negative electrode active material and the carbon-based negative electrode active material are included in a weight ratio of 1:99 to 20:80.

7. The cylindrical type lithium secondary battery of claim 1, wherein the cylindrical type lithium secondary battery has a form factor ratio of 0.4 to 0.6.

8. The cylindrical type lithium secondary battery of claim 1, wherein the cylindrical type lithium secondary battery is a 46110 cell, a 48110 cell, a 4880 cell, a 4680 cell, or a 4695 cell.

9. The cylindrical type lithium secondary battery of claim 1, wherein a concentration of the lithium salt is in a range of 1.2 M to 1.3 M.

10. The cylindrical type lithium secondary battery of claim 1, wherein, in Formula 1, n is an integer of 3 to 7.

11. The cylindrical type lithium secondary battery of claim 1, wherein the compound represented by Formula 1 is included in an amount of 0.5 wt% to 3.0 wt% based on the total amount of the electrolyte.

12. The cylindrical type lithium secondary battery of claim 1, wherein the cyclic carbonate compound comprises vinylene carbonate, vinylethylene carbonate, or a mixture thereof.

13. The cylindrical type lithium secondary battery of claim 1, wherein the compound of Formula 1, the cyclic carbonate compound, and the 1,3-propanesultone are included in a weight ratio of 1:0.5:0.2 to 1:10:8.

14. The cylindrical type lithium secondary battery of claim 1, wherein the non-coating portion of the positive electrode plate and the non-coating portion of the negative electrode plate are formed along the winding direction of the electrode assembly on one side ends of the positive electrode plate and the negative electrode plate, respectively,
a current collecting plate is bonded to each of the non-coating portion of the positive electrode plate and the non-coating portion of the negative electrode plate, and
the current collecting plate is connected to an electrode terminal.

15. The cylindrical type lithium secondary battery of claim 14, wherein the non-coating portions of the positive electrode plate and the negative electrode plate are processed in a form of a plurality of independently bendable segments, and
at least a portion of the plurality of segments is bent toward a winding center of the electrode assembly.

16. The cylindrical type lithium secondary battery of claim 15, wherein the at least a portion of the plurality of segments is overlapped on an upper end and a lower end of the electrode assembly, and
the current collecting plate is bonded to the overlapped plurality of segments.

17. The cylindrical type lithium secondary battery of claim 14, wherein an insulation layer covering a portion of a positive electrode active material layer and a portion of the non-coating portion is further formed on the positive electrode plate along a direction parallel to the winding direction.

18. A battery pack comprising the cylindrical type lithium secondary battery of any one of claims 1 to 17.
